# EUROPEAN PATENT SPECIFICATION

(11) **EP 1 449 327 B1**
(45) Date of publication and mention of the grant of the patent: **12.10.2005**
(21) Application number: 01985831.5
(22) Date of filing: 28.11.2001
(51) Int. Cl.: H04L 12/28, G09B 5/14

(54) **INSTRUCTIONAL METHOD AND SYSTEM USING WIRELESS COMMUNICATION**
LEHRVERFAHREN UND SYSTEM, DAS DRAHTLOSE KOMMUNIKATION ANWENDET
PROCEDE ET SYSTEME D'INSTRUCTION UTILISANT LA COMMUNICATION SANS FIL

(43) Date of publication of application: 25.08.2004
(73) Proprietor: Nokia Corporation, 02150 Espoo (FI)
(72) Inventor: GÖRTZ, Udo, 44797 Bochum (DE); SOEHNER, Jens-Uwe, 44263 Dortmund (DE); THEIMER, Wolfgang, 44879 Bochum (DE); LEHN, Karsten, 59174 Kamen (DE); PAZINA, Marcus, 44789 Bochum (DE); HABERLAND-SCHLÖSSER, Knut, 44809 Bochum (DE); KLAMMER, Wolfgang, 44581 Castrop-Rauxel (DE); ZILLIKENS, Frank, 45276 Essen (DE)
(74) Representative: Becker Kurig Straus
(86) International application number: PCT/EP2001/013898
(87) International publication number: WO 2003/047172

(56) References cited:
- EP-A- 0 836 297
- WO-A-01/65743
- WO-A-99/48010
- HAARTSEN J: "BLUETOOTH - THE UNIVERSAL RADIO INTERFACE FOR AD HOC, WIRELESS CONNECTIVITY" , ON - ERICSSON REVIEW, ERICSSON. STOCKHOLM, SE, NR. 3, PAGE(S) 110-117 XP000783249 ISSN: 0014-0171 page 114; figure 6

## Description

### FIELD OF THE INVENTION

The present invention is related to a method for instructing a plurality of users and an instructional system for instruction of users having a mobile terminal device. Especially, the responses of the users responsive to instructional tasks provided to the users are evaluated by a common evaluation service provider wherein the instructional tasks, the respective responses and evaluations are distributed by a master mobile terminal device.

### BACKGROUND OF THE INVENTION

Mobile phones have become personal devices with high penetration rates, especially for young people. It is easy to carry them when moving from place to place and they provide good connectivity via the cellular link or short range links like infrared or Bluetooth (BT).

In the context of schools mobile phones are currently considered as devices which distort teaching or are used for cheating which is true in some circumstances. It is alleged that mobile phones, especially entertainment phones, can play an important role in computer-assisted learning. They can provide additional information for teaching lessons without having to maintain a computer pool in the classroom or a language lab. Instead of a computer they can be used to retrieve background information from dictionaries or other encyclopedias, from the Internet in general or they can be used to train vocabulary of a foreign language.

A platform carrying out the method for instructing or education is also a strong selling argument for the device, respectively. This is especially important for the parents of the (young) target group.

Terminal-based systems for interactive education are known in the art. WO 01 65743 teaches an interactive broadcast system for being used in an educational environment. The interactive broadcast system includes a public television broadcast system, on user-side, a television set to receive broadcast information from the public television broadcast system and a mobile terminal controller connected via a base station (acting solely for switching functionality) and a data transmission network to a management unit to receive in addition and/or in dependence with the broadcast information personalized information. Feedback to the received broadcast information can be achieved and effected by the user by the means of the mobile terminal controller.

In addition, WO 99 48010 describes a master-slave control system in communication networks. The master-slave control system is designated to establish (invasive) control over functions and capabilities of slave nodes which are logged into a network supervised by the master device.
Such master-slave control system can be utilized to enable a supervisor (teacher) supervision of a plurality of slave computers operated by trainees and the like.

An object of the invention is to provide a method for instructing users having a mobile terminal device. The method employs the communication capability of the mobile phones for exchanging exercises and exercise results and provides an central evaluation of the exercise results.

A further object of the invention is to provide a instructional system for instructing users having a mobile terminal device enabling the performing of the method.

### SUMMARY OF THE INVENTION

The prevent invention provides a method and an instructional system for instructing users. The method for instructing users is solved by independent claim 1. The instructional system for instructing users is solved by independent claim 26. The dependent claims describe embodiments of the method and the instructional system for instructing.

A method in accordance with the principles of the present invention comprises a plurality of users. Each user has a mobile terminal device. The mobile terminal devices are connected together via a first wireless communication network. The first communication network enables to communicate to each other. One of the mobile terminal devices of the plurality of mobile terminal devices may be operated as a master terminal device, whereas the other mobile terminal devices are operated as slave mobile terminal devices. The master terminal device further provides a connection to a service provider via a second communication network.

In a fist operation, the master terminal device distributes instructional tasks upon each of the slave terminal devices via the first wireless communication network. In a following operation, a response is generated or received by each of the users of the slave devices. The response is responsive to the respective received instructional tasks by the respective slave device. Further, the responses are transmitted from each of the slave terminal devices to the master terminal device via the first wireless communication network. Further, the responses are transmitted from the master terminal device to the service provider via the second communication network. Further, the service provider receives the responses, processes them and generates an evaluation corresponding to each of the responses. Further, the generated evaluations are transmitted to the master terminal device via the second communication network. Finally, the master terminal device distributes the evaluations upon the each of the slave terminal devices respective to their responses.

According to another embodiment of the invention, the instructional tasks may be provided by the service provider. Therefore, the instructional tasks which are distributed by the master terminal device may be received from the service provider by the master terminal device before distributing.

According to another embodiment of the invention, the instructional tasks may be processed by the master terminal device. The processing may comprise a modification of the instructional tasks or a part of the instructional tasks. Further, the processing of the instructional tasks may comprise the generating of the instructional tasks. Furthermore, the master terminal may provide the instructional tasks. The processing, modification and generating may be controlled by user action, like inputting of instructions for generating, modifying and controlling.

According to another embodiment of the invention, the master terminal device may distribute identical instructional tasks upon each of the slave terminal devices.

According to another embodiment of the invention, the master terminal device may distribute individual instructional tasks upon the slave terminal devices. Each slave may receive a different instructional task of instructional tasks, respectively. The instructional tasks may be individually adapted, for example by processing or modifying before distributing.

According to another embodiment of the invention, the instructional tasks may comprise an identification of the recipient. An identification of the recipient may ensure a reliable and correct distributing of the instructional tasks upon each of the slave terminal devices by the master terminal device. This may be important in case of distributing individual instructional tasks.

According to another embodiment of the invention, the response of each slave terminal device may comprise an identification of the transmitting slave terminal device. The identification may be a unique identification allowing to relate a response unambiguous to a slave terminal device.

According to another embodiment of the invention, the evaluation generated by the service provider may comprise an identification of slave terminal device generated the corresponding response. The identification may be a unique identification allowing to relate a generated evaluation unambiguous to a slave terminal device which generated a response on which the evaluation is based. The identification may be obtained from the respective processed and evaluation based response.

According to another embodiment of the invention, the generated evaluations may comprise further instructional tasks.

According to another embodiment of the invention, the reception of the response may comprise communicating between the slave terminal devices. The slave terminal devices may exchange information, data or interim results related to the generation of the responses.

According to another embodiment of the invention, the master terminal device may also generate a response responsive to instructional tasks provided to the master terminal device. The response may be generated by the user of the master terminal device. The reception of a response by the master terminal device may be similar to the reception of a slave terminal device. The response generated by the master terminal device may also comprise an identification of the master terminal device.

According to another embodiment of the invention, the instructional tasks may comprise a statement regarding time for the generation of the response. A response responsive to instructional tasks may have to be transmit at a defined moment (within a defined time limit).

According to another embodiment of the invention, the instructional tasks may comprise a period of time within which the responses may have to be transmitted to the master terminal device.

According to another embodiment of the invention, the processing and generating of the evaluation by the service provider may comprise seeking of further information. Therefore, the service provider may transmit a request to the further service provider and may receive a respective request response. The request response may be utilised for generating evaluations.

According to another embodiment of the invention, the first wireless communication network may be a cellular communication network. Mobile communication such as global system for mobile communication (GSM), universal mobile telecommunication system (UMTS) and related systems uses cellular communication networks.

According to another embodiment of the invention, the first wireless communication network may be a local wireless communication network. Local wireless communication networks may be based on infrared network or low power radio frequency networks.
According to another embodiment of the invention, the first wireless communication network may be a low power radio frequency (LP-RF) communication network. A LP-RF communication network may be a Bluetooth network or a wireless local area network (WLAN).

According to another embodiment of the invention, the second communication network may be a wire-based communication network. A wire-based communication network may be a local area network (LAN) or a wide area network (WAN). Further, the wire based communication network may be an analog or digital telephone line, a digital subscriber line (DSL) or a dedicated connection line.

According to another embodiment of the invention, the second communication network may be a wireless communication network or a cellular communication network or a local wireless communication network or a local wireless communication network or a LP-RF communication network.

According to another embodiment of the invention, the instructional tasks, the responses and the evaluation may be encrypted.

A instructional system in accordance with the principles of the present invention comprises a plurality of users. Each user has a mobile terminal device. The mobile terminal devices are connected together via a first wireless communication network. The first communication network enables to communicate to each other. One of the mobile terminal device of the plurality of mobile terminal devices is operated as a master terminal device, whereas the other mobile terminal devices are operated as slave mobile terminal devices. The master terminal device further provides a connection to a service provider via a second communication network.

The instruction system for instructing users comprises further a component for distributing instructional tasks from said master terminal device upon each of said slave terminal devices via said first wireless communication network, a component for receiving or generating a response responsive to said instructional tasks by each of said users, a component for transmitting said response from each of said slave terminal devices to said master terminal device via said first wireless communication network, a component for transmitting said responses from said master terminal device to said service provider via said second communication network, a component for processing said responses and generating an evaluation according to each of said responses by said service provider, a component for transmitting said evaluations from said service provider to said master terminal device via said second communication network and a component for distributing said evaluations from said master terminal device upon each of said slave terminal devices via said first wireless communication network.

A Component for receiving the instructional tasks by each of the slave terminal devices, a component for receiving the responses by the master terminal device, a component for receiving the response by the service provider, a component for receiving the evaluations by the master terminal device and a component for receiving the evaluation by the slave terminal device may be further available.

According to another embodiment of the invention, the component for distributing an instructional task from the master terminal device upon each of the slave terminal devices may comprise a component for receiving an instructional task from the service provider by the master terminal device.

According to another embodiment of the invention, the component for distributing an instructional task from the master terminal device upon each of the slave terminal devices may comprise a component for processing said instructional task by said master terminal device.

According to another embodiment of the invention, the component for distributing an instructional task from said master terminal device upon each of said slave terminal devices may comprise a component for receiving or generating of said instructional task by said master terminal device.

According to another embodiment of the invention, the component for receiving of said response responsive to said instructional tasks by each of the users may comprise a component for communicating between the slave terminal devices via said first wireless communication network.

According to another embodiment of the invention, the master terminal device may comprises additionally a component for receiving a response responsive to said instructional task by each of said users.

According to another embodiment of the invention, the first wireless communication network may be a cellular communication network, a local wireless communication network, or a low power radio frequency communication network

According to another embodiment of the invention , the second communication network may be a wire based communication network, a wireless communication network, a cellular communication network, a local wireless communication network or a low power radio frequency communication network.

According to another embodiment of the invention, the master terminal device may distribute identical instructional tasks upon each of the slave terminal devices.

According to another embodiment of the invention, the master terminal device may distribute individual instructional tasks upon the slave terminal devices. Each slave may receive a different instructional task of instructional tasks, respectively. The instructional tasks may be individually adapted, for example by processing or modifying before distributing.

According to another embodiment of the invention, the instructional tasks may comprise an identification of the recipient. An identification of the recipient may ensure a reliable and correct distributing of the instructional tasks upon each of the slave terminal devices by the master terminal device. This may be important in case of distributing individual instructional tasks.

According to another embodiment of the invention, the response of each slave terminal device may comprise an identification of the transmitting slave terminal device. The identification may be a unique identification allowing to relate a response unambiguous to a slave terminal device.

According to another embodiment of the invention, the evaluation generated by the service provider may comprise an identification of slave terminal device generated the corresponding response. The identification may be a unique identification allowing to relate a generated evaluation unambiguous to a slave terminal device which generated a response on which the evaluation is based. The identification may be obtained from the respective processed and evaluation based response.

According to another embodiment of the invention, the generated evaluations may comprise further instructional tasks.

According to another embodiment of the invention, the instructional tasks may comprise a statement regarding time for the generation of the response. A response responsive to instructional tasks may have to be transmit at a defined moment (within a defined time limit).

According to another embodiment of the invention, the instructional tasks may comprise a period of time within which the responses may have to be transmitted to the master terminal device.

According to another embodiment of the invention, the component for the processing and generating of the evaluation by the service provider may comprise a component for seeking of further information. Therefore, the component for seeking may transmit a request to the further service provider and may receive a respective request response. The request response may be utilised for generating evaluations.

According to another embodiment of the invention, the instructional tasks, the responses and the evaluation may be encrypted. Therefore, corresponding components for en-/decrypting may be available.

### BRIEF DESCRIPTION OF THE DRAWINGS

Referring now to the drawings in which like references numbers represent corresponding parts throughout.
- Fig. 1: shows a flow diagram of the method according to an embodiment of the invention,
- Fig. 2: shows a flow diagram illustrating the timely interaction sequence of a master, two slaves and a service provider according to an embodiment of the invention and with respect to Fig. 1,
- Fig. 3a: shows a block diagram of a master device illustrating the comprised components according to an embodiment of the invention,
- Fig. 3b: shows a block diagram of a slave device illustrating the comprised components according to an embodiment of the invention,
- Fig. 3c: shows a block diagram of a service provider illustrating the comprised components according to an embodiment of the invention,
- Fig. 3d: illustrates schematically a block diagram of a mobile phone according to an embodiment of the present invention,
- Fig. 4: shows a block diagram of the instructional system according to an embodiment of the invention.
- Fig. 5: illustrates a learning situation according to an embodiment of the method for instructing users with respect to the present invention.

### DETAILED DESCRIPTION

In the following description of the exemplary embodiments, reference is made to the accompanying drawings which form a part hereof, and in which is shown a way of illustration the specific embodiments in which the invention may be practised. It is to be understood that other embodiments may be utilised as structural changes may be made without departing from the scope of the present invention.

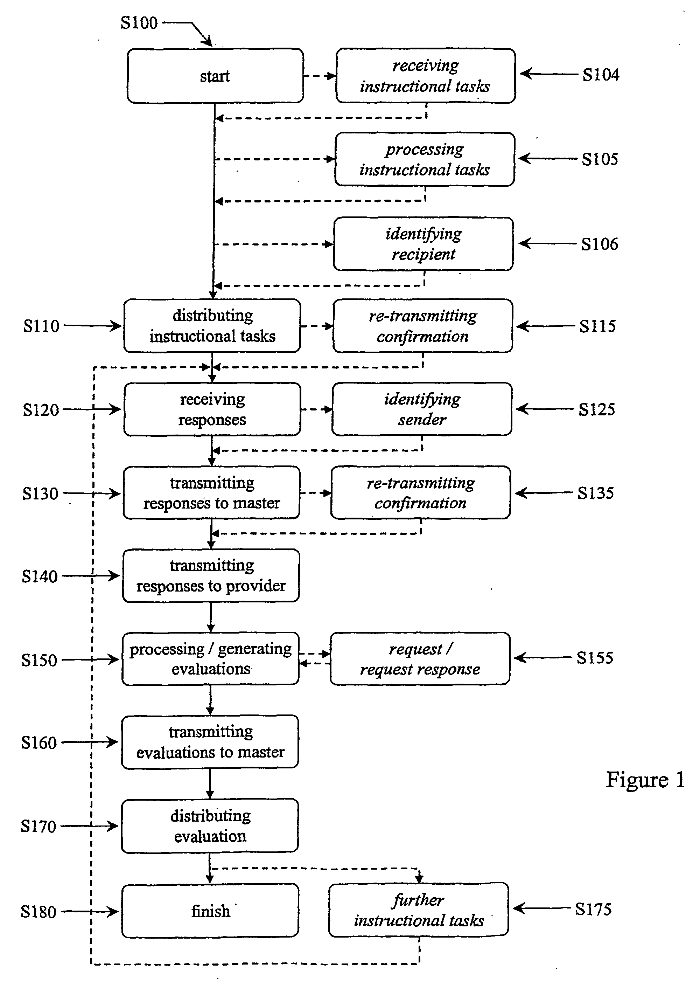

Fig. 1 shows a flow diagram of the method according to an embodiment of the invention. It may be noted that following description may be based on following situation:

According to an embodiment of the invention, a plurality of users each having a mobile terminal device may be assumed. The mobile terminal devices may communicate to each other via a wireless communication network. The wireless communication network may be a local wireless communication network. Local wireless communication networks may be a network based on infrared (IR) transceivers able to establish a communication network. Moreover, a local wireless communication network may be a low power radio frequency network. Different low power radio frequency networks are available and state of the art such as Bluetooth, wireless local area network (WLAN). A wireless communication network allows the connected mobile terminal devices to exchange electronic data.

A master device operating in a master mode out of the plurality of mobile terminal devices may be defined. Therefore, the remaining mobile terminal devices may be put into a slave mode so that these mobile terminal devices may be designated slave devices. The distinguishing of the master device and the salve devices will become clear with references to the following description.

Different methods may be possible to define the master device out of the plurality of mobile terminal devices.

For example, the initiating of the master mode may be started by user input. A user of a mobile terminal device may activate the master mode thereof by inputting an instruction. The inputting of an instruction may be a selection of a menu item offering the activation of the master mode. The remaining mobile terminal devices may have to register to the master device. The registration and the slave mode may be activated by inputting an instruction. The inputting of an instruction may be a selection of a menu item offering the registration of the mobile device and the activation of the slave mode. The registered slave devices may participate according to the method for instructing users with respect to an embodiment of the invention.

The mobile terminal devices may be configured to the respective mode automatically. The usage of a master device may be limited to a certain group of users. All other users may utilise exclusively their mobile terminal devices in the slave mode. The configuration to the slave mode may be initiated by an instruction transmitted via the wireless communication network. Each mobile terminal device receiving such an instruction configures automatically to the slave mode and participates according to the method for instructing users with respect to an embodiment of the invention. Examples of wireless communication networks will be given in the following description.

Furthermore, a service provider may be available. The service provider may be accessible exclusively by the master device. Slave devices may not be allowed to access services of the service provider. The master device may access the service provider communicating via a communication network. The communication network may be a wire-based communication network, a wireless communication network, a cellular communication network, a local wireless communication network or a low power radio frequency communication network. Moreover, the communication network may comprise several connected single communication networks of the above described types.

A wire-based communication network may be a local area network (LAN) or a wide area network (WAN). Local area networks and wide area networks are state of the art. A special world-wide available and accessible WAN is the internet. Further, the wire based communication network may be an analog or digital telephone line, a digital subscriber line (DSL) or a dedicated connection line.

A cellular communication network, a special type of a wireless communication network, may be a global system for mobile communication (GSM) network a code division multiple access (CDMA) network, a time division multiple access (TDMA) network, a universal mobile telecommunication system (UMTS) network or related mobile communication networks.

A local wireless communication network, a further special type of a wireless communication network, may be a communication network based on infrared (IR) transceivers.

A low power radio frequency communication network, a further special type of a wireless communication network, may be a Bluetooth network, a wireless local area network (WLAN) or related standards.

The different communication network may be interconnected by certain interconnection devices such that communication data may be passed from one of the interconnected communication network to another interconnected communication network. The interconnection of networks may be invisible for a user and even for a network device connected to one of the communication networks. Therefore, the master device and the service provider may be connected to different communication networks which are interconnected such that both the master device and the service provider may be able to communicate data to each other.

The flow diagram shows flow chart boxes having text information. It may be noted that flow chart boxes having normal styled text information indicate that the illustrated operation is a basic operation according to an embodiment of the invention, whereas flow chart boxes having italic styled text information may indicate that the illustrated operation is an additional operation according to an embodiment of the invention. Further, a flow chart box may designate not only a single operation, i.e. a flow chart box may designate a plurality of operations leading to the below described operational result.

In the following, an operational sequence comprising the basic operations according to an embodiment of the invention will be presented. The description of additional operations will follow hereto.

In an operation S100, the method for instructing users may be started.

In an operation S110, the master device comprises instructional tasks. The instructional tasks are designated to the users to be worked thereon. An instructional task may be transmitted to each slave device connectable to the master device. Each slave device may receive the same instructional task. It may also be possible to transmit different tasks to the connected slave devices. Therefore, the instructional tasks may comprise a recipient information and the master device may distribute the different instructional tasks according to the recipient information.

In order to enable the distribution of instructional tasks upon the slave devices by the master device the devices may be connected to a common wireless communication network.

Additionally, further information may be transmitted to or distributed upon the slave devices. The instructional tasks may comprise additional information concerning the dealing with the instructional tasks by the users of the slave devices.

These additional information may comprise a time information. The time information may be a period of time within which the instructional tasks may have to be solved by the users. The time information may be also a statement regarding time, e.g. defining the date of returning results corresponding to the informational tasks.

The distributed instructional tasks may be received and stored by the slave devices connected to the master device.

In an operation S120, a user may generate a response according to the instructional task or instructional tasks transmitted from the master device. The response generation may by done by inputting the response directly in the slave device. Further, a generation of the response may involve the usage of further data processing devices. According to an embodiment of the invention, it may be preferably to transmit the instructional tasks comprising additional information to an externally connected device such as a personal computer. Thereon, the instructional tasks may be displayed and the user generates the response. In a following step the response may by transmitted back to the slave device. The kind of generating the response may not be limited by the invention.

The response may comprise an identification of the user or its slave device, respectively. The generation of a reliable identification may be described in a following section of the description of the present invention.

In an operation S130, the user generated response according to the instructional task may be transmitted to the master device. The master device may collect the responses of all slave devices to which an instructional task or instructional tasks have been transmitted.

The responses may have to comprise information of their origin and their producer, respectively. This information may be included in or appended to the response by the respective slave device transmitting the response to the master device. It may also be possible to append or include a respective information by the master device to the response. In case of transmission of the response from the slave device to the master device the master device may be able to identify the transmitting slave device and may modify the response such that the response comprises a unique identification of its origin.

Further, the response may be encrypted. An encryption may be preferable to prevent the misuse of response in case of a erroneous distributing, in case of confidential content, in case of illegal listing on the distributing communication network and the like. Especially, local wireless communication networks of the state of the art, such as Bluetooth and wireless local area network (WLAN), might not offer reliable secure communication between connected devices. Encrypting algorithm, which are out of the scope of the present invention, are state of the art and available.

The encryption of the response may involve a decryption of the response by the master device or by the service provider.

The generation of the response, operation S120, or the transmitting of the response to the master device, operation S130, may comprise an encryption of the response.

The user generated responses of the slave devices may be communicated to the master device via a wireless communication network of the above described type.

The master device may store the received responses.

In an operation S140, the master device may transmit the responses transmitted from the slaves further to a service provider. The response may be transmitted using a communication network. According to the description above, the communication network is not limited to a certain communication network type and may be even a combination of different communication networks linked together, such that the combined communication network may allow devices connected to the different communication networks to communicate and exchange data with each other.

In an operation S150, the service provider may provide the services of processing the responses and generating an evaluation of the responses. The processing and the generating may be performed automatically. It may also be possible that the service may be performed manually, preferably supported by services provided by data processing devices and their possibilities and abilities.

In an operation S160, the evaluations may be transmitted to the master device. An identification of the response transmitting slave device or the response generating user which may be comprised by the response may have to be also comprised by the evaluation according to the response. The identification may be necessary to enable the following distribution of the evaluations upon the slave devices such that each of the slave devices may receive only an evaluation according to the response transmitted thereof before.

It may be preferable, to make the responses comprising a user/producer or slave device identification anonymous. The master device may include or append an anonymous identification. This may be necessary due to public data protection law. An internal table of the master device may enable to assignment of the slave device or user/producer identification to the anonymous identification employed to distinguishing and identifying of the responses transmitted to the service provider and the evaluations related to the responses generated by the service provider and transmitted to the master device.

In an operation S170, the evaluations may be distributed upon each of the slave device. The evaluations may comprise further instructional tasks. The providing of further instructional tasks comprised by the evaluations may be an optional feature of the method for instructing users according to an embodiment of the invention.

In an operation S180, the described method for instruction users according to an embodiment of the present invention may be finished in case of no further instructional tasks comprised by the distributed evaluations.

Several operational sequences according to the operational sequence presented in Fig. 1 may be carried out parallel. Parallel operated sequences may not interfere each other. To ensure an interfered operating of several operational sequences the instructional tasks, responses on the instructional tasks and the respective evaluations may comprise further information which may enable to relate the respective transmitted data to a certain operational sequence. Therefore, it may be advantageous for example to code the participating master device since a slave device may be connected to different transmitting master devices in case of participating of the slave device in several independent operated operational sequences comprising different master devices.

### Additional operations:

In an operation S104, the instructional tasks which may be distributed upon the slave devices may be received by the master device. A service provider may provide the tasks on a corresponding request of the master device before the distributing.

In an operation S105, the instructional tasks may be processed before distribution upon the slave device. The processing may be performed by inputting instructions by the user of the master device therein. It may also be possible to transmit the instructional tasks to further connected terminal devices offering certain adapted functions and features for processing the instructional tasks.

A processing of the instructional tasks may comprise a modifying , an adapting or an individualising of the instructional tasks. A modifying and adapting of the instructional tasks may be preferable in case of receiving of the instructional tasks from a respective service provider. By modifying or adapting the instructional tasks, the tasks may be adapted to certain requirements according to the distributing situations. Moreover, a service provider providing instructional tasks may provide a kind of basic instructional tasks. The user of the master device may be able and allowed to transform the basic instructional tasks to the desired structure.

An individualisation or personalisation may be preferable in case of distributing different individual instructional tasks upon each of the slave devices.

The processing of the instructional tasks may comprise encryption of the instructional tasks. An encryption may be preferable to prevent the misuse of instructional tasks in case of an erroneous distributing, in case of confidential content, in case of illegal listing on the distributing communication network and the like. Especially, local wireless communication networks of the state of the art, such as Bluetooth and wireless local area network (WLAN), might not offer reliable secure communication between connected devices. Encryption algorithms, which are out of the scope of the present invention, are state of the art and available.

Accordingly, encrypted instructional tasks may have to be decrypted by the receiving slave for further processing and/or generation of a response.

In an operation S106, the instructional tasks may be processed to comprise an identification of the receiving slave device. The identification of the recipient may be necessary in case of distributing different individual instructional tasks to the slave devices. Further, it may be possible to distribute instructional tasks to only a selection of the plurality of slave devices connected to the master device. The identification of the recipient may ensure a distribution only upon the selected slave devices.

The individual identification and individual instructional may be also preferable in case of encryption of the instructional tasks according to the utilised encryption algorithm.

In an operation S115, the reception of an instructional task by a slave device may be confirmed by re-transmitting a respective confirmation from the slave device to the master device. The confirmation may comprise information on the receiving time but may also be used to ensure an error-free transmission of the instructional task, e.g. by comprising a checksum.

In an operation S125, the response may comprise an identification of the slave device of the user/producer of the response. The response may have to be relatable or assignable to the slave device or user/producer by the master device. The identification of the slave comprised by the response may be passed over to the respective evaluation responsive to the response during the processing of the response and generating of the responsive evaluation according to the operations S150. The passed over identification may enable the master device to distribute the evaluations upon the respective concerning slave devices.

In an operation S135, the reception of a response by a master device may be confirmed by re-transmitting a respective confirmation from the master device to the respective slave device. The confirmation may comprise information on the receiving time but may also be used to ensure an error-free transmission of the response, e.g. by comprising a checksum.

In an operation S155, the processing of the responses by the service provider and the generation of the evaluation may comprise further operations. For example, the service provider may generate a request directed to a further service provider and may receive a corresponding request response therefrom. The processing and generating of the service provider is adapted to the responses corresponding to the instructional tasks. Examples will be given in the following description of embodiments according to the present invention.

In an operation S175, if the evaluation distributed by the master device upon each slave device comprises further new instructional tasks the operational sequence may be continued with operation S120, indicated in Fig. 1.

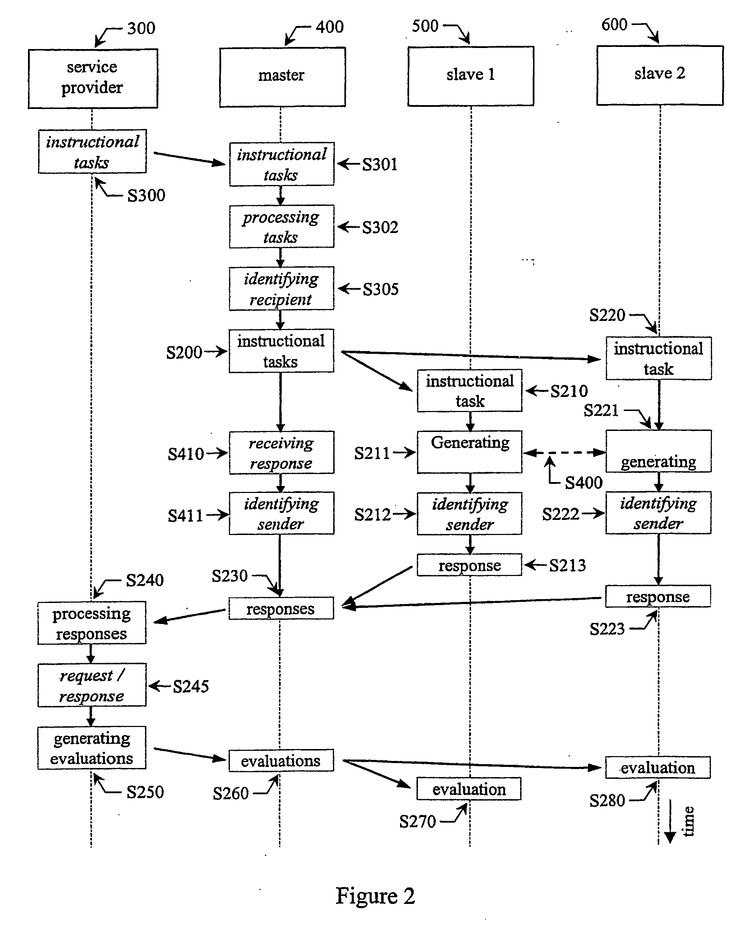

The description of the Fig. 1 presents an embodiment according to the method for instructing users of the invention. In order to describe the embodiment in more detail Fig. 2 shows a timely sequence of the operations comprising a tabular classification of the single operations in relation to respective participating device. References to Fig. 1 are included in the description of Fig. 2 in order to complete the description.

The single depicted operations in Fig. 2 surrounded by doted lines relate to the operations shown in Fig. 1 and described in the corresponding description. Vertical arrows shown in Fig. 2 link operations which are carried out by the respective device depicted at the top of the respective column. Arrows linking operations of different columns indicate transmissions of data between the respective devices.

According to the distinguishing of basic and additional operations introduced in the description of Fig. 1 basic operations may be recognised by normal styled text whereas additional operations are depicted using italic styled text.

A service provider 300, a master device 400 (master) and two slave devices 500 (slave 1) and 600 (slave 2) may be provided. The two slave devices 500 and 600 represent an arbitrary number of slave devices and may not limit the number of slave devices according to the method for instructing users of the present invention.

In an operation S200, instructional tasks may be provided by master device 400 for distribution upon the slave devices 500 and 600. The distribution of the instructional tasks is related to operation S110 shown in Fig. 1.

In an operation S210, slave device 500 receives the instructional task transmitted by master device 400. An optional re-transmission of a confirmation (see operation S115, Fig. 1) is not depicted in Fig. 2 but may be possible. In an operation S211, the response may be generated by the user. This operation is related to operation S120 shown in Fig. 1. In an operation S212, the response may be processed to comprise an identification of the user/producer or the slave device 500, respectively. Accordingly, this operation is related to operation S125 shown in Fig. 1. In an operation S213, the generated response may be prepared for transmitting and may be transmitted to the master device 400.

In an operation S220, slave device 600 receives the instructional task transmitted by master device 400. An optional re-transmission of a confirmation (see operation S115, Fig. 1) is not depicted in Fig. 2 but may be possible. In an operation S221, the response may be generated by the user. This operation is related to operation S120 shown in Fig. 1. In an operation S222, the response may be processed to comprise an identification of the user/producer or the slave device 600, respectively. Accordingly, this operation is related to operation S125 shown in Fig. 1. In an operation S223, the generated response may be prepared for transmitting and may be transmitted to the master device 400. The operations S210, S211, S212 and S213, respectively, relating to slave device 500 and the operations S220, S221, S222 and S223, respectively, relating to slave device 600 are analog due to the fact that the operational steps of slave devices are equal according to an embodiment of the present invention.

In an operation S230, the master device 400 may receive the responses of each slave device 500 or 600. The master device 400 may collect the responses of the slave devices. With respect to operation S140 of Fig. 1, the master device 400 may transmit the responses to a service provider 300 for processing and generating an evaluation according to the respective responses.

In an operation S240, The service provider 300 may receive the responses from the master device 400. The responses may be transmitted commonly or sub-sequentially corresponding to the reception of the responses from the slave devices 500 or 600. The responses may be further processed by the service provider. The processing of the responses is described in operation S150 shown in Fig. 1. In an operation S245, further provider requests concerning the processing of the responses or the generating of the respective evaluation may be generated and transmitted by the service provider 300 to a further service provider accessible via a communication network. The respective provider request responses may be included or taken into consideration during the generating of the evaluations. In an operation S250, the service provider 300 may generate the evaluations corresponding to the responses. The operations of the service provider 300 are related to the operations S150 and S155 shown in Fig. 1. The evaluations may be transmitted to the master device 400.

In an operation S260, the master device 400 receives the evaluations from the service provider 300. The master device 400 may store the received evaluation. The master device 400 may distribute the evaluations upon the slave devices 500 and 600.

In an operation S270, the slave device 500 may receive an evaluation corresponding to the generated and transmitted response. In an operation S280, the slave device 600 may receive an evaluation corresponding to the generated and transmitted response. The distributing and receiving operations S260, S270 and S280 are related to the operation S170 shown in Fig. 1.

The operational sequence may end with operation S270 and operation S280, respectively. If the evaluations comprise further instructional tasks the operational sequence may be continued with operation S210 in case of slave device 500 and with operation S220 in case of slave device 600, respectively.

In an operation S300, the service provider 300 may provide the instructional tasks and may transmit the instructional tasks to the master device 400. The provision of the instructional tasks may be controlled by a request transmitted from the master device 400 to the service provider 300 instructing the service provider 300 to provide and transmit the instructional tasks. This operation is related to operation S104 shown in Fig. 1.

In an operation S301, the instructional tasks may be received from a service provider 300 or may be provided by the master device 400 itself.

In an operation S302, the master device 400 may process the instructional tasks. The processing may comprise an individualisation of the instructional tasks. This operation is related to operation S105 shown in Fig. 1.

In an operation S305, the instructional tasks may be processed in order to comprise a recipient. A comprising recipient may be advantageous in case of different individual instructional tasks to be distributed upon the slave devices 500 or 600. This operation is related to operation S106 shown in Fig. 1.

It may be noted that the sequence may be started at anyone of the operations S300, S301, S302, S305 or S200, respectively.

The ability of the slave devices to receive and transmit data via a wireless communication network may not be limited to communicating to the master device. The slave devices may also communicate to each other. This intercommunication ability of the slave devices may be employed during the generation of the responses, see operations S211 or S221, respectively. Interim results corresponding to the generation of the respective responses may be exchanged between each other, which is shown in operation S400. The respective exchanged data may be taken into consideration during the generation of the respective responses.

Since the master device and the slave device are selected from a plurality of mobile terminal devices and each mobile terminal device may act as a master device, the master device may be able to generate a response according to instructional tasks. This possibility may be used employing the master device also for processing instructional tasks and generating a response responsive to the instructional tasks. Therefore, the operations S410 and S411 are analog to the operations S211 and S212 of slave device 500 or to the operations S221 and S222 of slave device 600, respectively, like described in detail above. The master device may act corresponding to a slave device.. This additional slave device operations may not limit the master device operations such as distributing instructional tasks upon slave devices or collecting responses from salve devices.

Different components of the participated devices allow users of the mobile terminal devices to carry out the method for instructing users with respect to an embodiment according the system for instructing users of the invention. The following figures are related to the respective components.

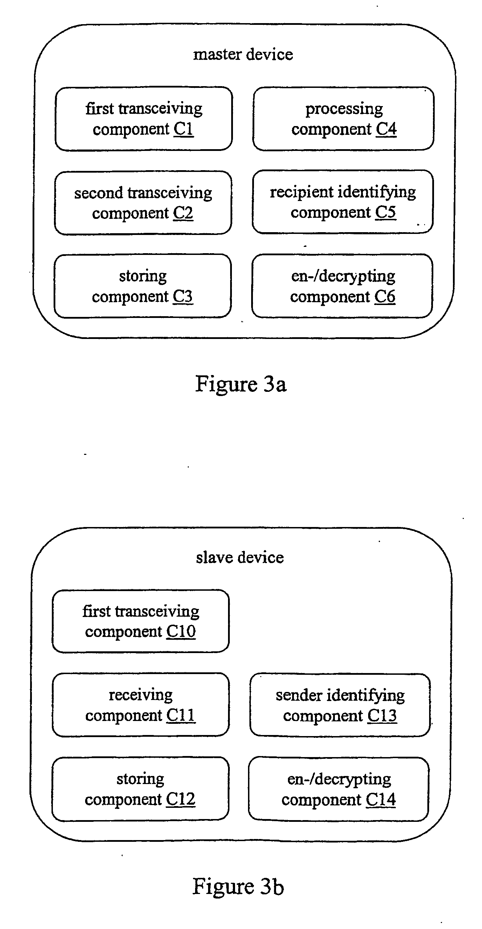

Fig. 3a shows a block diagram of a master device illustrating the comprised components according to an embodiment of the invention. A master device may be provided.

The master device may comprise a first transceiving component C1 and a second transceiving component C2. The first transceiving component C1 may be able to communicate via the first communication network. The first communication network enable the communication between the mobile terminal devices of the users, i.e. the master device and the plurality of slave devices. The first communication network may be a wireless communication network. A wireless communication network may be based on a infrared transceiver, a Bluetooth transceiver, a wireless local area network (WLAN) transceiver or similar local low power transceivers. Further a wireless communication network may be a cellular communication network, i.e. the first transceiving component C1 may be a cellular transceiver according to the global system for mobile communication (GSM) standard, the universal mobile telecommunication system (UMTS) standard, or other related standard for cellular mobile communication. The master device communicates via the second communication network to the service provider. The second communication network may be a wire-based communication network, a wireless communication network or a combination of different wire-based and wireless communication networks. Wireless communication networks are described above. Wire-based communication networks may be a local area network (LAN), a wide area network (WAN) or the internet. Further a wire-based network may comprise analog or digital telephone lines, digital subscriber lines or dedicated connection lines.

Further the master device may comprise a storing component C3. A storing component C3 may be a random access memory (RAM), a re-configurable read only memory (ROM), such as a flash-able ROM or any other state of the art storing medium comprised by the master device. The storing component C3 may be used for storing instructional tasks and responses of the slave devices.

Further the master device may comprise a processing component C4 for processing the instructional tasks, a recipient identifying component C5 for providing the instructional tasks with a recipient identification and an en-/decrypting component C6 for encrypting and decrypting instructional tasks, responses and evaluations.

The processing component C4 for processing the instructional tasks may be constituted by a dedicated data processing device, may be a code section containing instructions for carrying out processing of the instructional tasks or may be realised by a script or a program code section executed at the master device.

The recipient identifying component C5 for providing the instructional tasks with a recipient identification may be constituted by a dedicated data processing device, may be a code section containing instructions for carrying out providing the instructional tasks with a recipient identification or may be realised by a script or a program code section executed at the master device.

The en-/decrypting component C6 for encrypting and decrypting instructional tasks, responses and evaluations may be constituted by a dedicated data processing device, may be a code section containing instructions for carrying out encrypting and decrypting instructional tasks, responses and evaluations or may be realised by a script or a program code section executed at the master device.

Fig. 3b shows a block diagram of a slave device illustrating the comprised components according to an embodiment of the invention.

The slave device may comprise a first transceiving component C10. The first transceiving component C10 may be able to communicate via the first communication network. The first communication network enable the communication between the mobile terminal devices of the users, i.e. the master device and the plurality of slave devices. The first communication network is described in detail in Fig. 3a.

Further the slave device may comprise a storing component C12. A storing component C12 may be a random access memory (RAM), a re-configurable read only memory (ROM), such as a flash-able ROM or any other state of the art storing medium comprised by the master device. The storing component C12 may be used for storing instructional tasks and generated responses.

Further the master device may comprise a receiving component C11 for generating a response, a sender identifying component C13 for providing the response with a sender identification and an en-/decrypting component C14 for encrypting and decrypting instructional tasks and responses.

The receiving component C11 for generating a response may be constituted by a dedicated data processing device, may be a code section containing instructions for carrying out a generating a response or may be realised by a script or a program code section executed at the master device. The generating of the response responsive to the instructional tasks may involve further components. In case of generating the response employing the slave device a inputting component (not shown in Fig. 3a) for inputting instructions for generating the response may be provided. The inputting component may be a menu comprising menu items offering the inputting of generation instructions. Further, an inputting component may be a keyboard or a keypad, such as a QWERTY-Keyboard (typewriter keyboard), a ITU-T (international telecommunication union - telephony) keyboard or the like.

The sender identifying component C13 for providing the response with a sender identification may be constituted by a dedicated data processing device, may be a code section containing instructions for carrying out providing the response with a sender identification or may be realised by a script or a program code section executed at the slave device.

The en-/decrypting component C14 for encrypting and decrypting instructional tasks, responses and evaluations may be constituted by a dedicated data processing device, may be a code section containing instructions for carrying out encrypting and decrypting instructional tasks, responses and evaluations or may be realised by a script or a program code section executed at the slave device.

The master device and the slave devices of a plurality of mobile terminal devices may comprise the same components since the master device may be chosen arbitrarily from the plurality of mobile terminal devices. Therefore, the first transceiving component C1 and the first transceiving component C10 is the same first transceiving component C1/C10, the storing component C3 and the storing component C12 is the same storing component C3/C12, respectively, and the en-/decrypting component C6 and en-/decrypting component C14 is the same en-/decrypting component C6/C14.

A mobile communication terminal according to an embodiment of the instructional system of the present invention may comprise:
- a first transceiving component C1/C10,
- a second transceiving component C2,
- a storing component C3/C12,
- processing component C4 for processing the instructional tasks,
- receiving component C11 for generating a response,
- recipient identifying component C5 for providing the instructional tasks with a recipient identification,
- sender identifying component C13 for providing the response with a sender identification and
- en-/decrypting component C6/C14 for encrypting and decrypting instructional tasks, responses and evaluations.

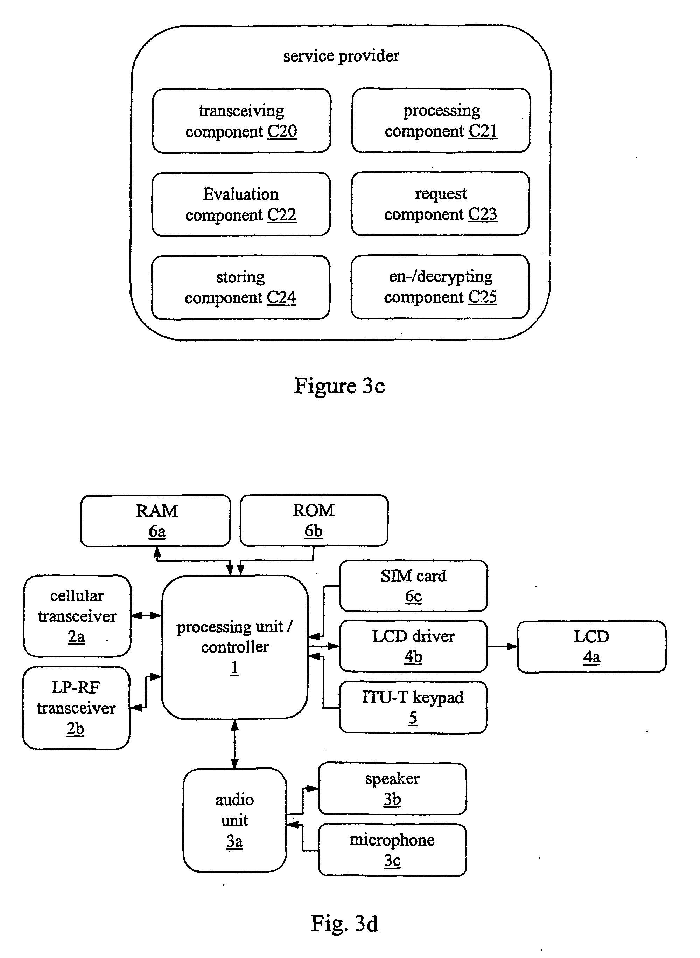

Fig. 3c shows a block diagram of a service provider illustrating the comprised components according to an embodiment of the invention.

The service provider may comprise a transceiving component C20 for receiving responses from the master device and for transmitting evaluations to the master device via a communication network providing access to the master device. The communication network may be a wire-based communication network, a wireless communication network or a combination of different wire-based and wireless communication networks. Wireless communication networks are described above. Wire-based communication networks may be a local area network (LAN), a wide area network (WAN) or the internet. Further a wire-based network may comprise analog or digital telephone lines, digital subscriber lines or dedicated connection lines. The master device and the service provider may be connected to different communication networks for communicating to each other. Therefore, the different communication networks have to be interconnected.

Further the slave device may comprise a storing component C24. A storing component C24 may be a random access memory (RAM), a re-configurable read only memory (ROM), such as a flash-able ROM or any other state of the art storing medium comprised by the master device. The storing component C24 may be used for storing instructional tasks and generated responses.

Further the service provider may comprise an evaluation generating component C22 for generating evaluations, a processing component C21 for processing responses, a request generating component C23 for generating and evaluating requests to further service providers and evaluating respective request responses and an en-/decrypting component C25 for encrypting and decrypting responses and evaluations.

The evaluation generating component C22 for generating evaluations may be constituted by a dedicated data processing device, may be a code section containing instructions for carrying out generating evaluations and responses or may be realised by a script or a program code section executed at the service provider.

The processing component C21 for processing responses may be constituted by a dedicated data processing device, may be a code section containing instructions for carrying out processing responses or may be realised by a script or a program code section executed at the service provider.

The request generating component C23 for generating and evaluating requests to further service providers and evaluating respective request responses may be constituted by a dedicated data processing device, may be a code section containing instructions for carrying out generating and evaluating requests to further service providers and evaluating respective request responses or may be realised by a script or a program code section executed at the service provider.

The en-/decrypting component C25 for encrypting and decrypting responses and evaluations may be constituted by a dedicated data processing device, may be a code section containing instructions for carrying out encrypting and decrypting responses and evaluations and responses or may be realised by a script or a program code section executed at the service provider.

Further, the evaluation generation component C22 for generating evaluations may comprise inputting component (not shown) for inputting instruction for generating evaluations. The inputting component may be a menu comprising menu items offering the inputting of generation instructions. Further, an inputting component may be a keyboard or a keypad, such as a QWERTY-Keyboard (typewriter keyboard), a ITU-T (international telecommunication union - telephony) keyboard or the like.

Preferably, the service provider may be a processing device or a plurality of connected processing devices. The service provider may be a server, a server system or a personal computer.

Fig. 3d illustrates schematically a block diagram of a mobile phone according to an embodiment of the present invention.

The mobile phone may be controlled by a processing unit or controller 1, respectively. Different further units may be connected to the controller 1. A cellular transceiver 2a may be connected to the controller 1. The cellular transceiver 2a may be able to transmit signals to a base station of a cellular mobile communication network or to receive signals therefrom by an antenna (not depicted). A low power radio frequency (LP-RF) transceiver 2b may be connected to the controller 1. The low power radio frequency (LP-RF) transceiver 2b may be able to transmit signals via a low power radio frequency mobile communication network or to receive signals therefrom by an antenna (not depicted).

The transmitted and received signals may be digitally coded voice and/or data signals. Voice signals may be processed additionally in an audio unit 3a connected to the controller 1 and to a microphone 3c for recording audio signals and a speaker 3b for generating and playing audio signals. The voice signal may be processed by an analog-to-digital A/D converter (microphone recorded signals) or a digital-to-analog D/A converter (signals to speaker), respectively. A random access memory (RAM) 6a and a read only memory (ROM) 6b may be further provided to the mobile phone and connected to the controller 1. The RAM 6a and ROM 6b may be used for storing program products which are executed to operate the mobile phone. The user interface of the mobile phone comprises a ITU-T keypad 5, a liquid crystal display (LCD) driver 4b and a LC display 4a. In order to identify uniquely the mobile phone a subscriber identification module (SIM) card 6c may be comprised.

The mobile phone may be a mobile phone adapted to connect with a GSM 900 MHz and/or GSM 1800 MHz cellular mobile communication network, but the invention may be also adapted to connect related other mobile communication networks, like UMTS. Further, the low power radio frequency transceiver 2b may be a Bluetooth transceiver 2b. But the low power radio frequency transceiver may also be a wireless local area network transceiver.

The mobile phone, described herein, may comprise the components illustrated in Fig. 3a and Fig. 3b. References to Fig. 3a and Fig. 3b will be made in order to identify the respective components of the master device and the slave device in the mobile phone.

The first transceiving component C1/C10 may be the Bluetooth transceiver 2b and the second transceiving component C2 may be the cellular (GSM) transceiver 2a. The low power radio frequency (Bluetooth) transceiver 2b may be employed for communicating between the master device and the slave devices whereas the cellular (GSM) transceiver 2a may be employed for communicating between master device and service provider.

The RAM 6a or the ROM 6b, especially a re-configurable ROM like a flashable ROM, may be equal to the storing component C3/C12.

The controller 1 may provide processing capabilities. These processing capabilities may be employed for realising the processing component C4 for processing the instructional tasks and the receiving component C11 for generating a response. These components may be realised by a code section containing instructions to be carried out by the controller 1 or the processing unit of the mobile phone, respectively.

The receiving component C11 for generating a response may comprise inputting components. These inputting components may be realised by employing the ITU-T keypad of the mobile phone or by offering a menu using the display 4a of the mobile phone. Selecting a certain key may indicate a selection of a respective menu item and may initiate a certain instruction related to the generation of the response.

Each wireless transceiver has to comprise a world-wide unique identification due to a world-wide ability of employment of these transceivers. A cellular transceiver may use information which is coded on a subscriber identification module (SIM) card 6c. Information coded on a SIM card 6c comprises world-wide unique information and therefore a world-wide unique identification of the mobile phone or the mobile phone user, respectively, and hence also the world-wide employment of the mobile phone. Low power radio frequency transceivers comprise related world-wide unique identification comparable to a MAC address known in combination with network devices. This information may be used for identifying the respective slave mobile phone according to the recipient identifying component C5 for providing the instructional tasks with a recipient identification and the sender identifying component C13 for providing the response with a sender identification. The respective addressing information may be included in or appended to the respective data sequence to be transmitted such as the instructional tasks, the responses and the evaluations, respectively. A code section containing respective instructions may be carried out by the controller 1 or the processing unit of the mobile phone, respectively.

Both the cellular transceiver 2a and the low power radio frequency transceiver 2b employ encryption on communicated data, especially in case of employing a GSM transceiver 2a or a Bluetooth or a WLAN transceiver 2b, respectively. Hence, a dedicated en-/decrypting component C6/C14 for encrypting and decrypting instructional tasks, responses and evaluations is implemented in the respective transceivers 2a and 2b.

The mobile phone described herein may comprise the components according to an embodiment of the instructional system of the present invention and may be employed for carrying out an embodiment according to the method for instructing users of the present invention.

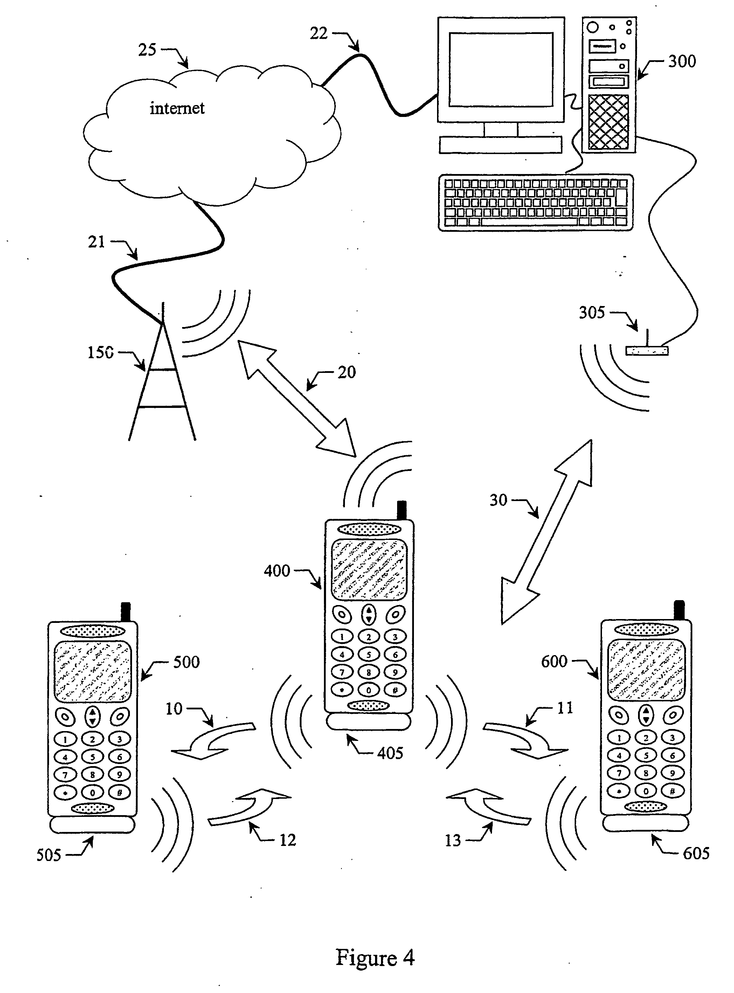

Fig. 4 shows a block diagram of the instructional system according to an embodiment of the invention.

The block diagram illustrates a master device 400, a first slave device 500 and a second slave device 600. The master and the both slave devices may be mobile phones according to an embodiment of a mobile phone shown in Fig. 3d. The each mobile phone comprises a first transceiver communicating via a cellular network and a second transceiver communicating via a low power radio frequency network, herein a Bluetooth network. The respective Bluetooth transceivers of the slave devices 500, 600 and the master device 400 are indicated by the reference numerals 505, 605 and 405. The Bluetooth network may provide communication links between the master device 400 and the slave device 500 indicated by the arrows 10 and 12 as also between the master device 400 and the slave device 600 indicated by the arrows 11 and 13. The slave devices may also communicated to each other via the Bluetooth network (not shown).

Further, the master device 400 may communicate via the cellular network 20 to a cellular base station 150 and thereof a via a network link 21 to internet provider. The internet provider may enable access to the internet 25 and may enable the communication via a network link 22 to a service provider 300. Accordingly, the master device 400 and the service provider 300 may communicate data to each other via the described network communication link.

The master device may also be allowed to connect to the service provider via the Bluetooth transceiver 405. For example, a Bluetooth network may enable a wireless link 30 to a Bluetooth transceiver 305 of the service provider.

The following embodiments according to the present invention may be based on a mobile phone, described in Fig. 3d, and the described in Fig. 4.

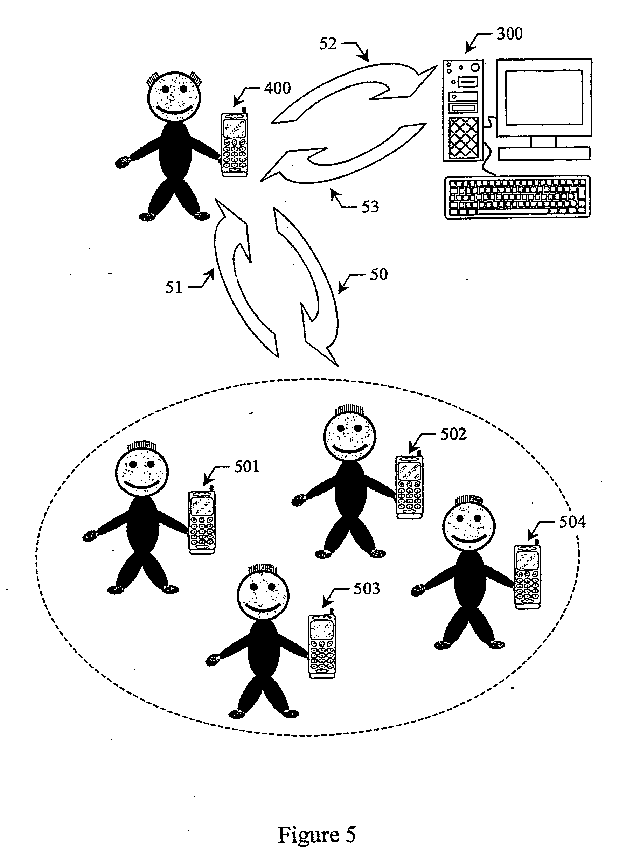

Fig. 5 illustrates a learning situation according to an embodiment of the method for instructing users with respect to the present invention.

The block diagram of Fig. 5 shows a typical learning and teaching situation. An instructor may be provided with a mobile phone acting as master device 400. A plurality of trainees may be provided with mobile phones acting as slave devices 501, 502, 503 and 504. Master device 400 and slave devices 501, 502, 503 and 504 may communicate via a low power radio frequency (LP-RF) communication network, indicated by the arrows 50 and 51. The master device 400 may further communicate via a communication, herein a cellular communication network and further communication networks connected thereto, to a central teaching server 301. The communication between master device 400 and central teaching server 301 may be indicated by arrows 52 and 53.

Following examples will present a selection of possible embodiments of the method and instructional system for instructing users having mobile terminal devices. The selection of the examples may not limiting to the present invention and shall expound the possibilities of the present invention.

### Homework:

A trainer may provide homework exercises to the trainees of a class. According to an embodiment of the invention, the teacher may distribute the respective exercises via his master device 400 upon the trainees having slave devices 501, 502, 503 and 504. The exercises may comprise information and questions related thereto. Further, a period of time available for the trainees may also comprised by the distributed exercises and may for example automatically generate an entry within a built-in calendar of the mobile device for reminding the trainees.

The trainees may generate answers to the questions. The generation of the questions may comprise a directly inputting of the answers in the mobile phone, for example the respective mobile phone may be equipped with a typewriter (QWERTY) keyboard and therefore providing adequate inputting means. The trainees may also work out the answers on a further device and transfer the completed answers to the mobile phone for a later transmitting to the master device 400.

At a certain point of time, the answers may have been transmitted to the master device 400 of the trainer. The trainer may transmit the answers on to the central teaching server 301. This central teaching server 301 may provide an automatically processing of the answers and generating of respective evaluations. It may be possible that the central teaching server 301 may only pre-process or may only generate a part of the evaluation. The trainer may support the processing of the answers and the generating of the evaluations.

Further, the respective evaluations may be transmitted from the central teaching server 301 to the master device 400 and distributed thereby upon the mobile phones or slave devices 501, 502, 503 and 504 of the trainees.

The central teaching server 301 may provide a selection of possible homework exercises and a trainer may receive exercises by his master device 400 for distribution upon the trainees. The trainer may request for exercises by transmitting an instruction to the central teaching server 301. Further, the trainer may process the exercises, for example modifying values or adding/removing of questions, before distributing. Moreover, the trainer may be possible to distribute different exercises to the trainees by employing a specific recipient information to the homework exercises.

### utterance training:

The generation of an answer may also comprise the recording of voice and/or speech. Recording of voice and/or speech may be used to train the utterance of a foreign language. A trainer may distribute an electronic book upon his trainees via the trainer's master device according to an embodiment of the above described method for instructing. The trainees may be instructed to repeat a played text passage of the electronic book. The mobile phone of the trainees may comprise an utterance analysing component. A reference utterance comprised by the electronic book may be compared with the recorded utterance of the speaking trainee. The utterance comparing component may generate a measure of the similarity. In case of a sufficient similarity a corresponding response may be generated comprising e.g. the measure of similarity, a confirmation of success and/or related information and transmitted via the trainer's master device to the central teaching server. The central teaching server may evaluate the response wherein the evaluation comprises for example an adapted electronic book to train especially utterance of problematic text passages. This evaluation may be re-transmitted via the trainer's master device to the respective concerning trainees according to an embodiment of the method of the present invention.

It may also be possible that the central teaching server performs the processing of the utterance of the trainee. A generated evaluation may comprise the a value indicating the quality of the utterance and may request the trainee to repeat or the continue in the exercise of the utterance. Communication network of the sate of the art providing the capability of high network transmission rates may allow to evaluate the recorded utterance at a server connected via the communication network.

### vocabulary training and examination:

Vocabulary training and even vocabulary examination may be realised according to the above described embodiment of the present invention.

A trainer may provide instructional tasks comprising single word or parts of single words. The trainees may be instructed to generate a response, for example by inputting text employing a keyboard connected to the mobile phone or built-in the mobile phone, comprising the translation into another language or a synonym of the provided word. Further, words may have to be completed or added corresponding to a provided part of a word. The evaluation of the vocabulary training may be processed automatically by the central teaching server. The evaluation transmitted from the processing central teaching server to the mobile phone of the trainees via the mobile phone of the trainer may comprise a grading of the training.

According to another example geographical knowledge may be trained. The user of the master device may define different geographical subjects, like a metropolis, a state and a river of the United States of America. These subjects may be distributed upon the slave devices further instructing the user to response respective names. Additionally, a initial character of the names of a metropolis, a state and a river may be defined. The users of the slave devices receive a respective instructional task and may input the names into their slave device.

The following table may illustrate an interim state of an inputting of an user of one of the slave devices. The table shows the subject: metropolis, state and river. The user is instructed to generate a response comprising three answers according to the three different initial characters "P", "N" and "W" to each subject, depicted in bold face.

| **round** | **metropolis** | **state** | **river** |
|---|---|---|---|
| 1 | **P**ittsburgh | **P**ennsylvania | **P**otomac |
| 2 | **N**ew York | **N** | **N** |
| 3 | **W** | **W**isconsin | **W** |

A corresponding response may be generated on the slave device e.g. by entering the respective answers using the keypad of the salve device and transmitted to the master device. The master device transmits the received responses to a server corresponding to the above described central teaching server. The server processes the responses, i.e. checks the answers inputted by the users of the slave devices and generates evaluations comprising the checking result. The evaluation may also comprise the further answers of the participating users or may present all legal answers according to the selected subject.

It may be noted that the described method may not be limited to vocabulary examination or geographical knowledge. The presented embodiment may be extended easily to other fields of knowledge.

The embodiment of a geographical knowledge may be extended to a geographical knowledge competition. A computational training of knowledge may be especially interesting by the training of young students.

Again, the user of the master device may define the geographical subjects: metropolis, state and river of the United States of America. The respective instructional task may be distributed upon the slave devices participating on the competition. Since the slave devices offers communication capability, an initial character may be thrown by anyone of the salve device and distributed to the other slave devices. The competition starts with the receiving of the thrown initial character. The participators may have to input respective answers to generate the response. If one of the participator finished the task he may stop the competition by transmitting a stopping instruction to the other participator again according to the communication capability of the slave devices. The stopping instruction may instruct the slave devices to complete at once the generation of the responses even if the inputting is not finished. The responses are transmitted to the master device and further to an evaluating server according to the central teaching server. The server checks the answers of the participator comprised by the responses and generates respective evaluations. The performing of the generating of the evaluation may ensure a correct evaluation of the responses of the participator.

The evaluation may comprise a grading of the inputted answers in order to allow the participator to compare their performance. The following table represents a possible evaluation content. The table comprises the subjects of the geographical competition (metropolis, state and river), a numbering referencing the participators (part.) and a grading of the participator corresponding to its answers. Herein, 10 points may be granted to a correct answer.

| **part.** | **city** | **country** | **river** | **points** |
|---|---|---|---|---|
| 1 | **N**ew York | **N**ew Jersey | **N**iobrara | 30 |
| 2 | **N**ew York | - | - | 10 |
| 3 | **N**ew York | **N**ew Mexico | | 20 |
| 4 | - | **N**ebraska | - | 10 |

The evaluations may be transmitted to the master device and may be distributed upon the slave devices of the participating users. The participators may compare their different checked answers.

The user of the master device may also participate to the competition since the master device may provide also the
programming interface:

The instructional tasks which may be distributed by the trainer upon the trainees may comprise additionally software tools, code sections containing instructions or program code, respectively. The software tools, code sections containing instructions or program code may be employed for generating the response responsive to the instructional task. The mobile terminal devices receiving the instructional tasks may have a corresponding programming interface. The programming interface may be a proprietary programming interface. It may be noted that programming interfaces may also provide standardised programming interfaces, such as Kjava which is a special programming language developed mobile terminal devices like mobile phones based on the device and system independent programming language Java.

The software tools, code sections containing instructions or program code may provide instructions for displaying information, inputting instruction for generating the response or processing information.

The foregoing description of the exemplary embodiments of the invention has been presented for the purpose of illustration and description. It is not intended to be exhaustive or to limit the invention to the precise form disclosed. Many modifications and variations are possible in light of the above teaching. It is intended that the scope of the invention be limited not with this detailed description, but rather by the claims appended hereto.

## Claims

1. Method for instructing a plurality of users each having a mobile terminal device each being connected to a first wireless communication network, in which one of said mobile terminal devices is acting as a master terminal device (400), whereas said remaining mobile terminal devices are acting as slave terminal devices (500, 600), said master terminal device (400) being connected to a service provider (300) via a second communication network,
**characterized in that** the following operative steps are carried out:
- providing (S200) instructional tasks by said master terminal device (500, 600), wherein said instructional tasks are assigned to said users of said slave terminal devices (500, 600) to be worked thereon,
- distributing (S200, S210, S220) instructional tasks from said master terminal device (400) upon each of said slave terminal devices (500, 600) via said first wireless communication network,
- receiving (S211, S221) responses responsive to said instructional tasks by each of said users,
- transmitting (S410) said responses from said slave terminal devices (500, 600) to said master terminal device (400) via said first wireless communication network,
- transmitting (S230) said responses from said master terminal device (400) to said service provider (300) via said second communication network,
- processing (S240, S250) said responses and generating an evaluation for each of said responses by said service provider (300), and
- transmitting (S250, S260) said evaluations from said service provider (300) to said master terminal device (400) via said second communication network.

2. Method according to claim 1, **characterized in that** distributing an instructional task from said master terminal device (400) upon each of said slave terminal devices (500, 600) comprises the antecedent step:
- receiving (S301) an instructional task from said service provider (300) by said master terminal device (400).

3. Method according to claim 2, **characterized in that** distributing an instructional task from said master terminal device (400) upon each of said slave terminal devices (500, 600) comprises:
- processing (S302) said instructional task by said master terminal device (400).

4. Method according to anyone of the preceding claims, **characterized in that** distributing an instructional task from said master terminal device (400) upon each of said slave terminal devices (500, 600) comprises:
- generating said instructional task by said master terminal device (400).

5. Method according to anyone of the preceding claims, **characterized in that** the same instructional task is distributed from said master terminal device (400) upon each of said slave terminal devices (500, 600).

6. Method according to anyone of the preceding claims, **characterized in that** after transmittal of the evaluations to said master terminal device (400) the following step is carried out: distributing said evaluations from said master terminal device (400) upon each of said slave terminal devices (500, 600) via said first wireless communication network.

7. Method according to anyone of the preceding claims, **characterized in that** individual instructional tasks are distributed from said master terminal device (400) upon each of said slave terminal devices (500, 600).

8. Method according to anyone of the preceding claims, **characterized in that** an individual instructional task comprises an identification of a slave terminal device (500, 600).

9. Method according to anyone of the preceding claims, **characterized in that** each response comprises an identification of a sending/receiving slave terminal device (500, 600).

10. Method according to anyone of the preceding claims, **characterized in that** each evaluation comprises an identification of a respective slave terminal device (500, 600).

11. Method according to anyone of the preceding claims, **characterized in that** said receiving of said response responsive to said instructional tasks by each of the users comprises:
- communicating between the slave terminal devices (500, 600) via said first wireless communication network.

12. Method according to anyone of the preceding claims, **characterized in that** said master terminal device (400) carries out following operative step:
- receiving a response responsive to said instructional task by each of said users.

13. Method according to anyone of the preceding claims, **characterized in that** said evaluation comprises further instructional tasks.

14. Method according to anyone of the preceding claims, **characterized in that** said instructional tasks comprise a statement regarding the lapsed time for receiving said responses by said users.

15. Method according to anyone of the preceding claims, **characterized in that** said instructional tasks comprises a statement regarding the lapsed time for transmitting said responses.

16. Method according to anyone of the preceding claims, **characterized in that** processing said responses further comprises:
- transmitting (S245) requests from said service provider (300) to a request serving server,
- receiving (S245) request responses from said request serving server by said service provider (300).

17. Method according to anyone of the claims 1 to 16, **characterized in that** said first wireless communication network is a cellular communication network.

18. Method according to anyone of the claims 1 to 16, **characterized in that** said first wireless communication network is a local wireless communication network.

19. Method according to anyone of the claims 1 to 16, **characterized in that** said first wireless communication network is a low power radio frequency communication network.

20. Method according to anyone of the claims 1 to 19, **characterized in that** said second communication network is a wire based communication network.

21. Method according to anyone of the claims 1 to 19, **characterized in that** said second communication network is a wireless communication network.

22. Method according to anyone of the claims 1 to 19, **characterized in that** said second communication network is a cellular communication network.

23. Method according to anyone of the claims 1 to 19, **characterized in that** said second communication network is a local wireless communication network.

24. Method according to anyone of the claims 1 to 19, **characterized in that** said second communication network is a low power radio frequency communication network.

25. Computer program, comprising code means adapted to carry out all of the steps of anyone of claims 1 to 24, when said program is run on a computer.

26. Computer program product, comprising a computer readable medium having code means thereon adapted to carry out all of the steps of anyone of claims 1 to 24, when said code means are run on a computer.

27. Instructional system for instructing a plurality of users each having a mobile terminal device each being connected to a first wireless communication network, in which one of said mobile terminal devices acts as a master terminal device (400), whereas said remaining mobile terminal device act as slave terminal devices (500, 600), said master terminal device (400) being connected to a service provider (300) via a second communication network,
**characterized by**:
- instructional tasks by said master terminal device (400), wherein said instructional tasks are assigned to said users of said slave terminal devices (500, 600) to be worked thereon,
- a component for distributing (C1) instructional tasks from said master terminal device (400) upon each of said slave terminal devices (500, 600) via said first wireless communication network,
- a component for receiving (C11) a response responsive to said instructional tasks by each of said users,
- a component for transmitting (C10) said response from each of said slave terminal devices (500, 600) to said master terminal device (400) via said first wireless communication network,
- a component for transmitting (C2) said responses from said master terminal device (400) to said service provider (300) via said second communication network,
- a component for processing (C22) said responses and generating an evaluation for each of said responses by said service provider (300),
- a component for transmitting (C20) said evaluations from said service provider (300) to said master terminal device (400) via said second communication network, and
- a component for distributing (C1) said evaluations from said master terminal device (400) upon each of said slave terminal devices (500, 600) via said first wireless communication network.

28. Instructional system according to claim 27, **characterized in that** said component for distributing an instructional task from said master terminal device (400) upon each of said slave terminal devices (500, 600) comprises:
- a component for receiving an instructional task from said service provider (300) by said master terminal device (400).

29. Instructional system according to anyone of the claims 27 to 28, **characterized in that** said component for distributing an instructional task from said master terminal device (400) upon each of said slave terminal devices (500, 600) comprises:
- a component for processing said instructional task by said master terminal device (400).

30. Instructional system according to anyone of the claims 27 to 29, **characterized in that** said component for distributing an instructional task from said master terminal device (400) upon each of said slave terminal devices (500, 600) comprises:
- a component for generating of said instructional task by said master terminal device (400).

31. Instructional system according to anyone of the claims 27 to 30, **characterized in that** said component for receiving of said response responsive to said instructional tasks by each of the users comprises:
- a component for communicating between the slave terminal devices (500, 600) via said first wireless communication network.

32. Instructional system according to anyone of the claims 27 to 31, **characterized in that** said master terminal device (400) comprises additionally:
- a component for receiving a response responsive to said instructional task by each of said users.

33. Instructional system according to anyone of the claims 27 to 32, **characterized in that** said first wireless communication network is a cellular communication network.

34. Instructional system according to anyone of the claims 27 to 32, **characterized in that** said first wireless communication network is a local wireless communication network.

35. Instructional system according to anyone of the claims 27 to 32, **characterized in that** said first wireless communication network is a low power radio frequency communication network.

36. Instructional system according to anyone of the claims 27 to 35, **characterized in that** said second communication network is a wire based communication network.

37. Instructional system according to anyone of the claims 27 to 35, **characterized in that** said second communication network is a wireless communication network.

38. Instructional system according to anyone of the claims 27 to 35, **characterized in that** said second communication network is a cellular communication network.

39. Instructional system according to anyone of the claims 27 to 35, **characterized in that** said second communication network is a local wireless communication network.

40. Instructional system according to anyone of the claims 27 to 35, **characterized in that** said second communication network is a low power radio frequency communication network.

## Patentansprüche

1. Verfahren zum Instruieren einer Vielzahl von Nutzern, die jeweils ein mobiles Endgerät haben, das jeweils mit einem ersten drahtlosen Kommunikationsnetzwerk verbunden ist, wobei eines der mobilen Endgeräte als ein Master-Endgerät (400) arbeitet, während die verbleibenden mobilen Endgeräte als Slave-Endgeräte (500, 600) arbeiten, wobei das Master-Endgerät (400) mit einem Diensteanbieter (300) über ein zweites Kommunikationsnetzwerk verbunden ist, **dadurch gekennzeichnet, dass** die folgenden Arbeitsschritte ausgeführt werden:
- Liefern (S200) von Instruktionsaufgaben durch das Master-Endgerät (500, 600), wobei die Instruktionsaufgaben den Nutzern der Slave-Endgeräte (500, 600) zugewiesen sind, damit darauf gearbeitet wird,
- Verteilen (S200, S210, S220) von Instruktionsaufgaben von dem Master-Endgerät (400) auf jedes der Slave-Endgeräte (500, 600) über das erste drahtlose Kommunikationsnetzwerk,
- Empfangen (S211, S221) von Antworten, die auf die Instruktionsaufgaben reagieren, durch jeden der Nutzer,
- Senden (S410) der Antworten von den Slave-Endgeräten (500, 600) zu dem Master-Endgerät (400) über das erste drahtlose Kommunikationsnetzwerk,
- Senden (S230) der Antworten von dem Master-Endgerät (400) an den Diensteanbieter (300) über das zweite Kommunikationsnetzwerk,
- Verarbeiten (S240, S250) der Antworten und Erzeugen einer Bewertung für jede der Antworten durch den Diensteanbieter (300) und
- Senden (S250, S260) der Bewertungen von dem Diensteanbieter (300) an das Master-Endgerät (400) über das zweite Kommunikationsnetzwerk.

2. Verfahren nach Anspruch 1, **dadurch gekennzeichnet, dass** das Verteilen einer Instruktionsaufgabe von dem Master-Endgerät (400) auf jedes der Slave-Endgeräte (500, 600) den vorangehenden Schritt aufweist:
- Empfangen (S301) einer Instruktionsaufgabe von dem Diensteanbieter (300) durch das Master-Endgerät (400).

3. Verfahren nach Anspruch 2, **dadurch gekennzeichnet, dass** das Verteilen einer Instruktionsaufgabe von dem Master-Endgerät (400) auf jedes der Slave-Endgeräte (500, 600) aufweist:
- Verarbeiten (S302) der Instruktionsaufgabe durch das Master-Endgerät (400).

4. Verfahren nach einem der vorhergehenden Ansprüche, **dadurch gekennzeichnet, dass** das Verteilen einer Instruktionsaufgabe von dem Master-Endgerät (400) auf jedes der Slave-Endgeräte (500, 600) aufweist:
- Erzeugen der Instruktionsaufgabe durch das Master-Endgerät (400).

5. Verfahren nach einem der vorhergehenden Ansprüche, **dadurch gekennzeichnet, dass** dieselbe Instruktionsaufgabe von dem Master-Endgerät (400) auf jedes der Slave-Endgeräte (500, 600) verteilt wird.

6. Verfahren nach einem der vorhergehenden Ansprüche, **dadurch gekennzeichnet, dass** nach Übersendung der Bewertungen an das Master-Endgerät (400) der folgende Schritt ausgeführt wird:
- Verteilen der Bewertungen von dem Master-Endgerät (400) auf jedes der Slave-Endgeräte (500, 600) über das erste drahtlose Kommunikationsnetzwerk.

7. Verfahren nach einem der vorhergehenden Ansprüche, **dadurch gekennzeichnet, dass** einzelne Instruktionsaufgaben von dem Master-Endgerät (400) auf jedes der Slave-Endgeräte (500, 600) verteilt werden.

8. Verfahren nach einem der vorhergehenden Ansprüche, **dadurch gekennzeichnet, dass** eine einzelne Instruktionsaufgabe eine Identifikation eines Slave-Endgerätes (500, 600) aufweist.

9. Verfahren nach einem der vorhergehenden Ansprüche, **dadurch gekennzeichnet, dass** jede Antwort eine Instruktion eines sendenden/empfangenden Slave-Endgerätes (500, 600) aufweist.

10. Verfahren nach einem der vorhergehenden Ansprüche, **dadurch gekennzeichnet, dass** jede Bewertung eine Identifikation eines jeweiligen Slave-Endgerätes (500, 600) aufweist.

11. Verfahren gemäß einem der vorhergehenden Ansprüche, **dadurch gekennzeichnet, dass** das Empfangen der Antwort in Reaktion auf die Instruktionsaufgaben durch jeden der Benutzer aufweist:
- Kommunizieren zwischen den Slave-Endgeräten (500, 600) über das erste drahtlose Kommunikationsnetzwerk.

12. Verfahren nach einem der vorhergehenden Ansprüche, **dadurch gekennzeichnet, dass** das Master-Endgerät (400) den folgenden Arbeitsschritt ausführt:
- Empfangen einer Antwort in Reaktion auf die Instruktionsaufgabe durch jeden der Nutzer.

13. Verfahren nach einem der vorhergehenden Ansprüche, **dadurch gekennzeichnet, dass** die Bewertung weitere Instruktionsaufgaben enthält.

14. Verfahren nach einem der vorhergehenden Ansprüche, **dadurch gekennzeichnet, dass** die Instruktionsaufgaben eine Angabe bezüglich der abgelaufenen Zeit zum Empfangen der Antworten durch die Nutzer umfasst.

15. Verfahren nach einem der vorhergehenden Ansprüche, **dadurch gekennzeichnet, dass** die Instruktionsaufgaben ein Statement bezüglich der abgelaufenen Zeit zum Senden der Antworten umfasst.

16. Verfahren nach einem der vorhergehenden Ansprüche, **dadurch gekennzeichnet, dass** das Verarbeiten der Antworten ferner aufweist:
- Senden (S245) von Anforderungen von dem Diensteanbieter (300) an einen Anforderung-Dienstserver,
- Empfangen (S245) von Anforderungsantworten von dem Anforderung-Dienstserver durch den Diensteanbieter (300).

17. Verfahren nach einem der Ansprüche 1 bis 16, **dadurch gekennzeichnet, dass** das erste drahtlose Kommunikationsnetzwerk ein zellulares Kommunikationsnetzwerk ist.

18. Verfahren gemäß einem der Ansprüche 1 bis 16, **dadurch gekennzeichnet, dass** das erste drahtlose Kommunikationsnetzwerk ein lokales drahtloses Kommunikationsnetzwerk ist.

19. Verfahren nach einem der Ansprüche 1 bis 16, **dadurch gekennzeichnet, dass** das erste drahtlose Kommunikationsnetzwerk ein Funkfrequenz Kommunikationsnetzwerk mit geringer Leistung ist.

20. Verfahren nach einem der Ansprüche 1 bis 19, **dadurch gekennzeichnet, dass** das zweite Kommunikationsnetzwerk ein drahtgebundenes Kommunikationsnetzwerk ist.

21. Verfahren nach einem der Ansprüche 1 bis 19, **dadurch gekennzeichnet, dass** das zweite Kommunikationsnetzwerk ein drahtloses Kommunikationsnetzwerk ist.

22. Verfahren nach einem der Ansprüche 1 bis 19, **dadurch gekennzeichnet, dass** das zweite Kommunikationsnetzwerk ein zellulares Kommunikationsnetzwerk ist.

23. Verfahren nach einem der Ansprüche 1 bis 19, **dadurch gekennzeichnet, dass** das zweite Kommunikationsnetzwerk ein lokales drahtloses Kommunikationsnetzwerk ist.

24. Verfahren nach einem der Ansprüche 1 bis 19, **dadurch gekennzeichnet, dass** das zweite Kommunikationsnetzwerk ein Funkfrequenz-Kommunikationsnetzwerk mit geringer Leistung ist.

25. Computerprogramm aufweisend Code-Einrichtungen, die angepasst sind, alle Schritte eines der Ansprüche 1 bis 24 auszuführen, wenn das Programm auf einem Computer läuft.

26. Computerprogrammprodukt, aufweisend ein Computer lesbares Medium mit Code-Einrichtungen darauf, die angepasst sind, alle Schritte von einem der Ansprüche 1 bis 24 auszuführen, wenn die Code-Einrichtung auf einem Computer läuft.

27. Instruktionssystem zum Instruieren einer Vielzahl von Nutzern, die jeweils ein mobiles Endgerät haben, das jeweils mit einem ersten drahtlosen Kommunikationsnetzwerk verbunden ist, wobei eines der mobilen Endgeräte als Master-Endgerät (400) dient, während das verbleibende mobile Endgerät als Slave-Endgerät (500, 600) dient, wobei das Master-Endgerät (400) mit einem Diensteanbieter (300) über ein zweites Kommunikationsnetzwerk verbunden ist,
**gekennzeichnet durch**:
- Instruktionsaufgaben **durch** das Master-Endgerät (400), wobei die Instruktionsaufgaben den Nutzern der Slave-Endgeräte (500, 600) zugewiesen sind, damit darauf gearbeitet wird,
- eine Komponente zum Verteilen (C1) von Instruktionsaufgaben von dem Master-Endgerät (400) auf jedes der Slave-Endgeräte (500, 600) über das erste drahtlose Kommunikationsnetzwerk,
- eine Komponente zum Empfangen (C11) einer Antwort in Reaktion auf die Instruktionsaufgaben **durch** jeden der Nutzer,
- eine Komponente zum Senden (C10) der Antwort von jedem der Slave-Endgeräte (500, 600) an das Master-Endgerät (400) über das erste drahtlose Kommunikationsnetzwerk,
- eine Komponente zum Senden (C2) der Antworten von dem Master-Endgerät (400) zu dem Diensteanbieter (300) über das zweite Kommunikationsnetzwerk,
- eine Komponente zum Verarbeiten (C22) der Antworten und Erzeugen einer Bewertung für jede der Antworten **durch** den Diensteanbieter (300),
- eine Komponente zum Senden (C20) der Bewertung von dem Diensteanbieter (300) an das Master-Endgerät (400) über das zweite Kommunikationsnetzwerk, und
- eine Komponente zum Verteilen (C1) der Bewertungen von dem Master-Endgerät (400) auf jedes der Slave-Endgeräte (500, 600) über das erste drahtlose Kommunikationsnetzwerk.

28. Instruktionssystem gemäß Anspruch 27, **dadurch gekennzeichnet, dass** die Komponente zum Verteilen einer Instruktionsaufgabe von dem Master-Endgerät (400) auf jedes der Slave-Endgeräte (500, 600) aufweist:
- eine Komponente zum Empfangen einer Instruktionsaufgabe von dem Diensteanbieter (300) durch das Master-Endgerät (400).

29. Instruktionssystem gemäß einem der Ansprüche 27 bis 28, **dadurch gekennzeichnet, dass** die Komponente zum Verteilen einer Instruktionsaufgaben von dem Master-Endgerät (400) auf jedes der Slave-Endgeräte (500, 600) aufweist:
- eine Komponente zum Verarbeiten der Instruktionsaufgabe durch das Master-Endgerät (400).

30. Instruktionssystem gemäß einem der Ansprüche 27 bis 29, **dadurch gekennzeichnet, dass** die Komponente zum Verteilen einer Instruktionsaufgabe von dem Master-Endgerät (400) auf jedes der Slave-Endgeräte (500, 600) aufweist:
- eine Komponente zum Erzeugen des Instruktionsaufgabe durch das Master-Endgerät (400).

31. Instruktionssystem gemäß einem der Ansprüche 27 bis 30, **dadurch gekennzeichnet, dass** die Komponente zum Empfangen der Antwort in Reaktion auf die Instruktionsaufgaben durch jeden der Nutzer umfasst:
- eine Komponente zum Kommunizieren zwischen den Slave-Endgeräten (500, 600) über das erste drahtlose Kommunikationsnetzwerk.

32. Instruktionssystem gemäß einem der Ansprüche 27 bis 31, **dadurch gekennzeichnet, dass** das Master-Endgerät (400) zusätzlich aufweist:
- eine Komponente zum Empfangen einer Antwort in Reaktion auf die Instruktionsaufgabe durch jeden der Nutzer.

33. Instruktionssystem gemäß einem der Ansprüche 27 bis 32, **dadurch gekennzeichnet, dass** das erste drahtlose Kommunikationsnetzwerk ein zellulares Kommunikationsnetzwerk ist.

34. Instruktionssystem gemäß einem der Ansprüche 27 bis 32, **dadurch gekennzeichnet, dass** das erste Kommunikationsnetzwerk ein lokales Kommunikationsnetzwerk ist.

35. Instruktionssystem gemäß einem der Ansprüche 27 bis 32, **dadurch gekennzeichnet, dass** das drahtlose Kommunikationsnetzwerk ein Funkfrequenz-Kommunikationsnetzwerk mit geringer Leistung ist.

36. Instruktionssystem gemäß einem der Ansprüche 27 bis 35, **dadurch gekennzeichnet, dass** das zweite Kommunikationsnetzwerk ein drahtgebundenes Kommunikationsnetzwerk ist.

37. Instruktionssystem gemäß einem der Ansprüche 27 bis 35, **dadurch gekennzeichnet, dass** das zweite Kommunikationsnetzwerk ein drahtloses Kommunikationsnetzwerk ist.

38. Instruktionssystem gemäß einem der Ansprüche 27 bis 35, **dadurch gekennzeichnet, dass** das zweite Kommunikationsnetzwerk ein zellulares Kommunikationsnetzwerk ist.

39. Instruktionssystem gemäß einem der Ansprüche 27 bis 35, **dadurch gekennzeichnet, dass** das zweite Kommunikationsnetzwerk ein lokales drahtloses Kommunikationsnetzwerk ist.

40. Instruktionssystem gemäß einem der Ansprüche 27 bis 35, **dadurch gekennzeichnet, dass** das zweite Kommunikationsnetzwerk ein Funkfrequenz-Kommunikationsnetzwerk mit geringer Leistung ist.

## Revendications

1. Procédé pour l'instruction d'une pluralité d'utilisateurs ayant chacun un dispositif terminal mobile étant chacun connecté un premier réseau de communication sans fil, dans lequel un desdits dispositifs terminaux mobiles agit comme dispositif terminal maître (400), tandis que lesdits dispositifs terminaux mobiles restants agissent comme dispositif terminal esclave (500, 600), ledit dispositif terminal maître (400) étant connecté à un fournisseur de services (300) via un second réseau de communication,
**caractérisé en ce que** les étapes opérationnelles suivantes sont exécutées :
- délivrer (S200) des tâches d'instruction par ledit dispositif terminal maître (500, 600), dans lequel lesdites tâches d'instruction sont affectées aux dits utilisateurs desdits dispositifs terminaux esclaves (500, 600) pour être mises en oeuvre sur celle-ci,
- distribuer (S200, S210, S220) des tâches d'instruction depuis ledit dispositif terminal maître (400) sur chacun desdits dispositifs terminaux esclaves (500, 600) via ledit premier réseau de communication sans fil,
- recevoir (S211, S221) aux dites réponses aux dites tâches d'instruction par chacun desdits utilisateurs,
- transmettre (S410) aux dites réponses depuis lesdits dispositifs terminaux esclaves (500, 600) au dit dispositif terminal maître (400) via ledit premier réseau de communication sans fil,
- transmettre (S230) aux dites réponses depuis ledit dispositif terminal maître (400) au dit fournisseur de services (300) via ledit second réseau de communication,
- traiter (S240, S250) lesdites réponses et générer une évaluation pour chacune desdites réponses par ledit fournisseur de services (300), et
- transmettre (S250, S260) lesdites évaluations depuis ledit fournisseur de services (300) au dit- dispositif terminal maître (400) via ledit second réseau de communication.

2. Procédé selon la revendication 1, **caractérisé en ce que** la distribution d'une tâche d'instruction depuis ledit dispositif terminal maître (400) sur chacun desdits dispositifs terminaux esclaves (500, 600) comprend l'étape précédente :
- recevoir (S301) une tâche d'instruction provenant dudit fournisseur de services (300) par ledit dispositif terminal maître (400).

3. Procédé selon la revendication 2, **caractérisé en ce que** la distribution d'une tâche d'instruction depuis ledit dispositif terminal maître (400) sur chacun desdits dispositifs terminaux esclaves (500, 600) comprend :
- traiter (S302) ladite tâche d'instruction par ledit dispositif terminal maître (400).

4. Procédé selon l'une quelconque des revendications précédentes, **caractérisé en ce que** la distribution d'une tâche d'instruction depuis ledit dispositif terminal maître (400) sur chacun desdits dispositifs terminaux esclaves (500, 600) comprend :
- générer ladite tâche d'instruction par ledit dispositif terminal maître (400).

5. Procédé selon l'une quelconque des revendications précédentes, **caractérisé en ce que** la même tâche d'instruction est distribuée depuis ledit dispositif terminal (400) sur chacun desdits dispositifs terminaux esclaves (500, 600).

6. Procédé selon l'une quelconque des revendications précédentes, **caractérisé en ce qu'**après la transmission des évaluations au dit dispositif terminal maître (400), l'étape suivante est exécutée : distribuer lesdites évaluations depuis ledit dispositif terminal maître (400) sur chacun desdits dispositifs terminaux esclaves (500, 600) via ledit premier réseau de communication sans fil.

7. Procédé selon l'une quelconque des revendications précédentes, **caractérisé en ce que** les tâches d'instruction individuelles sont distribuées depuis ledit dispositif terminal maître (400) sur chacun desdits dispositifs terminaux esclaves (500, 600).

8. Procédé selon l'une quelconque des revendications précédentes, **caractérisé en ce qu'**une tâche d'instruction individuelle comprend une identification du dispositif terminal esclave (500, 600).

9. Procédé selon l'une quelconque des revendications précédentes, **caractérisé en ce que** chaque réponse comprend une identification d'un dispositif terminal esclave émetteur/récepteur (500, 600).

10. Procédé selon l'une quelconque des revendications précédentes, **caractérisé en ce que** chaque évaluation comprend une identification d'un dispositif terminal esclave respectif (500, 600).

11. Procédé selon l'une quelconque des revendications précédentes, **caractérisé en ce que** ladite réception de ladite réponse sensible aux dites tâches d'instruction par chacun des utilisateurs comprend les étapes consistant à :
- faire communiquer entre eux les dispositifs terminaux esclaves (500, 600) via ledit premier réseau de communication sans fil.

12. Procédé selon l'une quelconque des revendications précédentes, **caractérisé en ce que** le dispositif terminal maître (400) exécute l'étape opérationnelle suivante :
- recevoir une réponse sensible à ladite tâche d'instruction par chacun desdits utilisateurs.

13. Procédé selon l'une quelconque des revendications précédentes, **caractérisé en ce que** ladite évaluation comprend des tâches d'instruction supplémentaires.

14. Procédé selon l'une quelconque des revendications précédentes, **caractérisé en ce que** lesdites tâches d'instruction comprennent une règle concernant le temps écoulé pour recevoir lesdites réponses par lesdits utilisateurs.

15. Procédé selon l'une quelconque des revendications précédentes, **caractérisé en ce que** lesdites tâches d'instruction comprennent une règle concernant le temps écoulé pour transmettre lesdites réponses.

16. Procédé selon l'une quelconque des revendications précédentes, **caractérisé en ce que** le traitement desdites réponses comprend en outre les étapes consistant à :
- transmettre (S245) les demandes provenant dudit fournisseur de services (300) à un serveur de service de demande,
- recevoir (S245) les réponses aux demandes depuis ledit serveur de service de demande par ledit fournisseur de services (300).

17. Procédé selon l'une quelconque des revendications 1 à 16, **caractérisé en ce que** ledit premier réseau de communication sans fil est un réseau de communication cellulaire.

18. Procédé selon l'une quelconque des revendications 1 à 16, **caractérisé en ce que** ledit premier réseau de communication sans fil est un réseau local de communication sans fil.

19. Procédé selon l'une quelconque des revendications 1 à 16, **caractérisé en ce que** ledit premier réseau de communication sans fil est un réseau de communication radiofréquence à faible puissance.

20. Procédé selon l'une quelconque des revendications 1 à 19, **caractérisé en ce que** ledit second réseau de communication est un réseau de communication câblé.

21. Procédé selon l'une quelconque des revendications 1 à 19, **caractérisé en ce que** ledit second réseau de communication est un réseau de communication sans fil.

22. Procédé selon l'une quelconque des revendications 1 à 19, **caractérisé en ce que** ledit second réseau de communication est un réseau de communication cellulaire.

23. Procédé selon l'une quelconque des revendications 1 à 19, **caractérisé en ce que** ledit second réseau de communication est un réseau local de communication sans fil.

24. Procédé selon l'une quelconque des revendications 1 à 19, **caractérisé en ce que** ledit second réseau de communication est un réseau de communication radiofréquence à faible puissance.

25. Programme d'ordinateur, comprenant un moyen de code adapté pour exécuter toutes les étapes selon l'une quelconque des revendications 1 à 24, lorsque ledit programme est exécuté sur un ordinateur.

26. Produit de programme d'ordinateur comprenant un support lisible par ordinateur ayant un moyen de code sur celui-ci adapté pour exécuter la totalité des étapes selon l'une quelconque des revendications 1 à 24, lorsque lesdits moyens de code sont exécutés sur un ordinateur.

27. Système d'instruction pour l'instruction d'une pluralité d'utilisateurs ayant chacun un dispositif terminal mobile étant chacun connecté à un premier. réseau de communication sans fil, dans lequel un desdits dispositifs terminaux mobiles agit comme dispositif terminal maître (400), tandis que lesdits dispositifs terminaux mobiles restants agissent comme dispositifs terminaux esclaves (500, 600), ledit dispositif terminal maître étant connecté à un fournisseur de services (300) via un second réseau de communication,
**caractérisé par :**
- des tâches d'instruction par ledit dispositif terminal maître (400), dans lequel lesdites tâches d'instruction sont affectées aux dits utilisateurs desdits dispositifs terminaux esclaves (500, 600) pour être mises en oeuvre sur ceux-ci,
- un composant pour distribuer (C1) les tâches d'instruction depuis ledit dispositif terminal maître (400) sur chacun desdits dispositifs terminaux esclaves (500, 600) via ledit premier réseau de communication sans fil,
- un composant pour recevoir (C11) une réponse sensible aux dites tâches d'instruction par chacun desdits utilisateurs,
- un composant pour transmettre (C10) ladite réponse provenant de chacun desdits dispositifs terminaux esclaves (500, 600) au dit dispositif terminal maître (400) via ledit premier réseau de communication sans fil,
- un composant pour transmettre (C2) lesdites réponses depuis ledit dispositif terminal maître (400) au dit fournisseur de services (300) via ledit second réseau de communication,
- un composant pour traiter (C22) lesdites réponses et pour générer une évaluation pour chacune desdites réponses par ledit fournisseur de service (300),
- un composant pour transmettre (C20) lesdites évaluations depuis ledit fournisseur de service (300) au dit dispositif terminal maître (400) via ledit second réseau de communication, et
- un composant pour distribuer (C1) lesdites évaluations depuis ledit dispositif terminal maître (400) sur chacun desdits dispositifs terminaux esclaves (500, 600) via ledit premier réseau de communication sans fil.

28. Système d'instruction selon la revendication 27, **caractérisé en ce que** ledit composant pour la distribution d'une tâche d'instruction depuis ledit dispositif terminal maître (400) sur chacun desdits dispositifs terminaux esclaves (500, 600) comprend :
- un composant pour recevoir une tâche d'instruction depuis ledit fournisseur de service (300) par ledit dispositif terminal maître (400).

29. Système d'instruction selon l'une quelconque des revendications 27 ou 28, **caractérisé en ce que** ledit composant pour la distribution d'une tâche d'instruction depuis ledit dispositif terminal maître (400) sur chacun desdits dispositifs terminaux esclaves (500, 600) comprend :
- un composant pour traiter ladite tâche d'instruction par ledit dispositif terminal maître (400).

30. Système d'instruction selon l'une quelconque des revendications 27 à 29, **caractérisé en ce que** ledit composant pour la distribution d'une tâche d'instruction depuis ledit dispositif terminal maître (400) sur chacun desdits dispositifs terminaux esclaves (500, 600) comprend :
- un composant pour la génération de ladite tâche d'instruction par ledit dispositif terminal maître (400).

31. Système d'instruction selon l'une quelconque des revendications 27 à 30, **caractérisé en ce que** ledit composant pour la réception de ladite réponse sensible aux dites tâches d'instruction par chacun des utilisateurs comprend :
- un composant pour la communication entre les dispositifs terminaux esclaves (500, 600) via ledit premier réseau de communication sans fil.

32. Système d'instruction selon l'une quelconque des revendications 27 à 31, **caractérisé en ce que** ledit dispositif terminal maître (400) comprend de plus :
- un composant pour la réception d'une réponse sensible à ladite tâche d'instruction par chacun desdits utilisateurs.

33. Système d'instruction selon l'une quelconque des revendications 27 à 32, **caractérisé en ce que** ledit premier réseau de communication sans fil est un réseau de communication cellulaire.

34. Système d'instruction selon l'une quelconque des revendications 27 à 32, **caractérisé en ce que** ledit premier réseau de communication sans fil est un réseau local de communication sans fil.

35. Système d'instruction selon l'une quelconque des revendications 27 à 32, **caractérisé en ce que** ledit premier réseau de communication sans fil est un réseau de communication radiofréquence à faible puissance.

36. Système d'instruction selon l'une quelconque des revendications 27 à 35, **caractérisé en ce que** ledit second réseau de communication est un réseau de communication câblé.

37. Système d'instruction selon l'une quelconque des revendications 27 à 35, **caractérisé en ce que** ledit second réseau de communication est un réseau de communication sans fil.

38. Système d'instruction selon l'une quelconque des revendications 27 à 35, **caractérisé en ce que** ledit second réseau de communication est un réseau de communication cellulaire.

39. Système d'instruction selon l'une quelconque des revendications 27 à 35, **caractérisé en ce que** ledit second réseau de communication est un réseau local de communication sans fil.

40. Système d'instruction selon l'une quelconque des revendications 27 à 35, **caractérisé en ce que** ledit second réseau de communication est un réseau de communication radiofréquence à faible puissance.
